# EUROPEAN PATENT APPLICATION

(11) **EP 1 793 552 A1**
(43) Date of publication of application: **06.06.2007**
(21) Application number: 05026086.8
(22) Date of filing: 30.11.2005
(51) Int. Cl.: H04L 29/06, H04M 11/06

(54) **Communications network and method for retrieving end-user information**

(71) Applicant: SIEMENS AKTIENGESELLSCHAFT, 80333 München (DE)
(72) Inventor: Pedro, Azevedo, 1700-069 Lissabon (PT)
(74) Representative: Fischer, Michael

(57) **Abstract**

Communications network comprising a plurality of network elements linked to each other, said plurality of network elements comprising at least one end-user host (H) connected to an end-user device (D1, D2, D3), at least one switch (SW, SW_{ag}) and a network management system (NMS), wherein
- the switch comprises means for receiving and storing end-user information from the end-user device,
- the end-user information is retrievable from the switch by the network management system.

## Description

A communications network, in particular a communications network adapted to transmitting multicast data along with a method for retrieving end-user information, in particular user specific information in the network, is described.

US 20040264443 describes a digital subscriber line (DSL) access network in which a DSLAM is coupled to a remote dial-in user server (RADIOS) for authentication of multicast services to a user that is a multicast subscriber.

One objective to be achieved lies in providing a communications system in which end-user specific information is easily retrievable for the purposes of analysis, along with providing a method in which said end-user specific information can easily be retrieved in a communications system.

The objective is achieved by providing a communications network comprising a plurality of network elements linked to each other, wherein the said plurality of network elements comprise at least one end-user host connected to an end-user device, at least one switch and a network management system, characterised in that the switch comprises means for receiving and storing end-user information from the end-user device, further characterised in that the end-user information is retrievable from the switch by the network management system.

Such a communications network is advantageous in that end-user information can be tapped directly at the switch by a network management system (NMS), thereby eliminating the need for further network elements that have the sole purpose of retrieving the end-user information.

Another advantageous aspect of the invention can be seen in there being no need for data to be transferred at the application layer of the network in order to transfer the end-user information to the NMS. The application layer is considered to be layer 7 of the OSI Model, a layered abstract description for communications and computer network protocol design.

According to one preferred embodiment of the communications network, the switch comprises means for receiving and storing end-user information in the form of a read/writeable memory device, such as a memory chip. A logfile is preferrably provided, into which the user information can be uploaded. When the NMS, for example by means of a signal requesting latest user-information, taps the switch for said user information, it can do so by tapping the contents of the logfile or retrieving the logfile entirely.

According to another implementation of the switch, the stored end-user information is directly, that is, without a query from the NMS, transmittable from the switch to the NMS. The switch according to yet another implementation is configurable such that the tranmission of user-information from the switch may be activated periodically or alternatively in dependance of the number of times the memory chip or logfile is filled or updated with further user information.

The information tapped at the switch by the NMS may for example be channel-switching or so-called zapping behaviour of the end-user using the end-user device. As a result of this, a multimedia program can be selected by a provider and sent to the end-user in a manner dependent on the end-user behaviour as described by the end-user information.

The NMS that taps or receives the information stored in the switch is preferrably adapted to executing the set of functions required for controlling, planning, allocating, deploying, coordinating, and monitoring the resources of a network. This may include performing functions such as initial network planning, frequency allocation, predetermined traffic routing to support load balancing in the network, cryptographic key distribution authorization, configuration management, fault management, security management, performance management and accounting management.

According to another embodiment of the communications network, the switch is a UNI-Border switch that functions at the UNI (User Network Interface). It is preferrably of a type used in Carrier Grade Ethernet networks, i.e. at layer 2 (L2) of the OSI model and is employed to separate traffic within a plurality of VLANs.

One advantageous realisation of the switch in general or the UNI-Border switch is a DSLAM (Digital Subscriber Line Access Multiplexer) switch being a multiplexer that can provide users access to network services, for example via an end-user host. The switch may separate the data components, such as voice, video or audio data from subscriber lines originating at the end-user devices and may aggregate the data for sending over the network.

The DSLAM switch is preferrably configured to collect data traffic from multiple subscribers for a service into a centralized point so that it can be uploaded for example to a router or another network element, preferrably over an ATM connection via a DS3, OC3, E3, or OC12 link.

The end-user device itself preferrably comprises a user-network interface. This may be an interface in the form of a display device such as a monitor, a television, a video communications device, a fixed line telephone or a mobile telephone comprising a display device. The end-user device may also comprise a computer or be part of a computer.

An end-user device suitable for transmitting multimedia data to the user is preferred in particular for the case where the communications network is one suited to transmitting multicast data.

The end-user host is a device that acts as an interface between the communications network and the end-user device and communicates with it, such as in the preferred case where the end-user host comprises an STB (Set Top Box). The end-user host retrieves signals from the end-user device that indicate the manner of usage of the end-user device, such as the programs executed, the information, channels, video or audio program requested requested by the user. The end-user host may also comprise a decoder in the form of decoder hardware and decoder program products for decoding network data into information displayable or emittable by means of the the end-user device. The end-user host may be connected to a plurality of end-user devices, such as those belonging for example to a household or a defined business environment. The end-user host is preferrably connected to the said switch by means of a data link and is an immediate network neighbour of the switch,

It is preferred that the communications network comprises a plurality of LANs (Local Area Network) or VLANs (Virtual Local Area Networks), as this enlarges the number of network elements or users reacheable from a service provider. Such a communications network would also have the advantage that data can be redirected over certains alternative LANs or VLANs in the case that a nominally preferred route via a certain LAN or VLAN is physically disrupted or is undergoing a logical address change, as the case may be.

It is also preferred to have the at least one switch connected to a router, whereby one appropriate interpretation of a router is a switch that forwards data packets across a network toward their destinations by means of a routing process. The router may comprise a plurality of ports assigned to different LANs or VLANs and it interfaces between different LANS or VLANS. Thus, if the switch connected to the end-user host is a member of one LAN or assigned to a VLAN and if it is connected to a router, data tapped from the switch or transmitted by the switch itself may be passed onto another network element in another LAN or VLAN, depending on the address, for example MAC address, contained in the dataframe transmitted. The router is contained preferrably in the third OSI layer (L3) and makes datapacket forwarding decisions there.

A router that runs a BRAS (Broadband Remote Access Server) application, henceforth called a BRAS router, may constitute a part of the communications network. It may carry out one or more of the following:
- aggregating the output from the switch, in particular the DSLAM switch,
- providing user PPP (Point-to-Point Protocol) sessions or IP over ATM (Asynchronous Transfer Mode) sessions,
- enforcing QoS (Quality of Service) policies set by a service provider,
- routing traffic into an Internet service provider's core or backbone network.

It is furthermore preferred that the communications network is adapted to broadcast and transmit multicast data. The broadcast and transmission of multicast information, either of which may be wireless, can also be termed multiplexed broadcast or mulitplexed transmission. The multicast ability, and, in particular, the IP multicast ability of the network, has the advantage that the delivery of information to a group of destinations simultaneously is enabled, whereby it is preferred that the most efficient strategy is chosen to deliver messages only once over each link of the network.

Also, since in particular for the purpose of television there is interest from Content Providers, stations, networks and advertisers to have audits of a user's multimedia using behaviour, the communication network as a multimedia transmitting network is particularly advantageous.

Where the network transmits multicast messages, it is preferred that IGMP (Internet Group Management Protocol) is employed to manage the membership of Internet Protocol Multicast Groups. The IGMP Protocol is thus preferrably used by any number of network elements in the communications network, such as the end-user hosts and/oder possible Multicast Routers, to establish and/or confirm or reconfirm Multicast Group Memberships.

It is preferred that the network is an Ethernet based network, whereby Ethernet is considered to be a frame-based computer networking technology, in particular suitable for real and virtual LANs (Local Area Networks).

According to a particularly desirable implemenation of the communications network, it is adapted to carrying IPTV signals, whereby IPTV as a protocol comprises a system where a digital television service is delivered by a provider to subscribing users and can be used over a broadband connection. As IPTV can be employed in bi-directional communication, the use of DSL (Digital Subscriber Line) in the communications network is preferred.

A device for analysing end-user information may advantageously constitute a part of the communications network. The analyser is henceforth called a ratings analyser and is preferrably a device on which a program product for executing a statistical analysis of user information is mounted. It is preferred that the device correlates data comprising information concerning user identification, zapping information and/or the service being used by user. A correlation is considered to be a numeric measure of the strength of linear relationship between at least two variables. It is also considered to be a measure of the degree to which a plurality of variables depart from independence.

Further, a method for retrieving end-user information in a communications network is proposed, whereby
- end-user information is transmitted from an end-user host to a switch and is stored there,
- the stored end-user information is transmitted to a network management system.

The stored end-user information can, according to one implementation of the method, be transmitted to the network management system upon a query received at the switch from the network management system.

Alternatively, the stored end-user information is transmitted to the network management system at an interval, preferrably periodically.

The end-user information can be stored in a log-file.

The user-information can be send from the end-user host H via at least one switch to a multicast router, that may interface between a plurality of LANs or VLANs.

It is preferred that the end-user information is transmitted to a ratings analyser for anaylsis, whereby, according to another impelementation of the method, the end-user information is correlated by the ratings analyser with other information, such as stored statistical user-specific data or stored statistical data on other users. In particular, it is preferred that the user information is first passed from the network management system, then to the ratings analysier.

The end-user information may also be sent from the end-user host H via a least one switch to a transmitter / receiver station (VH). The transmitter / receiver station may then forward the information to another network comprising a network management system and/or a rating analyser.

It is preferred that the transmission of data in the network proceeds according to IGMP.

Furthermore, a switch for use in a communications network is proposed, comprising means for storing user-information transmitted from an end-user host. In particular, a switch, preferrably a UNI-Border switch, is proposed which interfaces between an NMS and an end-user host, whereby the switch is connectable to links leading to a plurality of network-elements, such as another switch, an end-user host, or a router. The switch is preferrably a DSLAM switch.

The methods and embodiments described here are further explained by means of the following drawings and preferred implementations, whereby:
- Drawing 1: shows a multicast network overview,
- Drawing 2: shows a first network bridge with IGMP snooping capability at an aggregation switch,
- Drawing 3: shows an alternative network bridge with IGMP snooping capability at a DSLAM and an aggregation switch,
- Drawing 4: shows yet another alternative network bridge with IGMP snooping capability at a DSLAM switch,
- Drawing 5: shows a multicast network overview comprising a ratings analyser.

It is proposed that the communications network constitutes a part of an Ethernet Access Network that is configured to deliver triple play services such as VoIP (Voice over Internet Protocol) communication, IPTV (Internet Protocol Television) and VoD (Video on Demand).

It is also proposed that IP Multicast traffic is generally forwarded in a network by means of IP multicast routers along IP multicast trees. The trees can be dynamically created by Multicast Routing Protocol until the traffic reaches an IGMP router. The following figures show parts of a communications network that lie between and include a multicast router and end-user devices.

It is furthermore proposed that hosts join Multicast Host Groups either by sending an unsolicited IGMP "Join" Message or by sending an IGMP "Join" message in response to a general query from an IGMP router. The Multicast Host Group comprises a plurality of end-user hosts identified by a single IP destination address. The membership of a Multicast Host Group is dynamic so that the hosts may join and leave the groups at any time. Moreover, a host may be a member of more than one group at a time. A Host Group may be permanent or transient.

The permanent Multicast Host Group is given an administratively assigned IP address, whereby it is the address and not the actual membership of the group that is permanent. A transient Multicast Host Group, on the other hand, is assigned an address dynamically when the group is created at the request of a host. A transient group ceases to exist, and its address becomes eligible for reassignment, when its membership drops to zero.

Thus, when an IGMP router receives a "Join" message for a specific IP Multicast Group on one of its router interfaces, for example a VLAN, it forwards traffic for this IP Multicast Group on this interface. The hosts may leave the IP Multicast group either silently by ignoring the periodic general IGMP queries sent by the IGMP router, or explicitly, whereby the host explicitly sends a "Leave" message if it would like to leave the IP Multicast Group.

The IGMP router may, however, continue to forward IP Multicast traffic for the IP Multicast Group on its router interface, as long as there is at least one host wishing to accept this IP Multicast traffic.

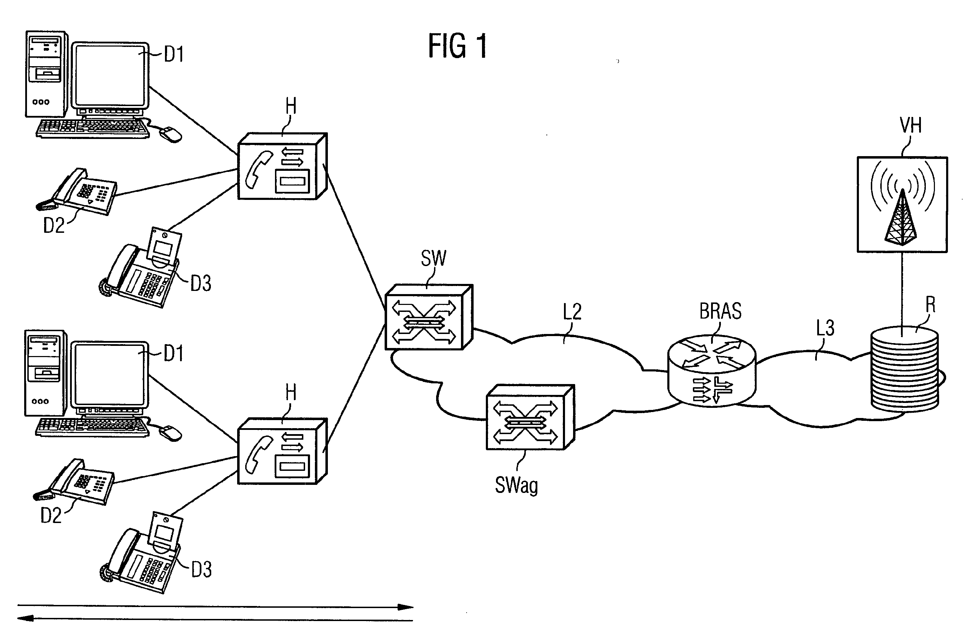

Referring to drawing 1, a plurality of IGMP end-user hosts H are each connected via allocated ports to end-user devices D1 to D3, which are shown as a television, a telephone and a computer. Other ports of the hosts H are connected to a common UNI Border DSLAM switch SW, which interfaces a first aggregation network L2. This network contains, among other network elements, at least one but preferrably a set of aggregation switches SW_{ag}. The UNI Border switches sw are thus connected to the aggregation switches SW_{ag}, which in turn are connected via designated ports to a BRAS router BRAS which is situated logically between the aggregation network L2 and another network L3, whereby L2 is considered to by layer 2 of the OSI model and L3 the third layer. An IGMP router R is provided in this further network L3 and is connected to a station VH, preferrably a video head end, adapted to transmitting, processing, receiving and distributing data, in particular multimedia data, over the communications network.

The arrows in the drawing pointing to the right indicate the transmission of IGMP "Join" Messages from the hosts H via the different network elements shown to the IGMP multicast router R. The leftward pointing arrows indicate the forwarding of multicast streams stemming from a service provider and passing via the station VH to the IGMP multicast router R, followe by passing through the various other mentioned network elements to the end-user hosts H.

For IPTV distribution in L2/L3 packet based networks, there is an IP multicast router present connected to the Video Head End that VH controls the multicast streams, where each TV channel belongs to one IP Multicast stream, i.e., one group destination address. If such multicast streams need to be carried over an L2 Ethernet network, the group destination address is translated into an Ethernet multicast address.

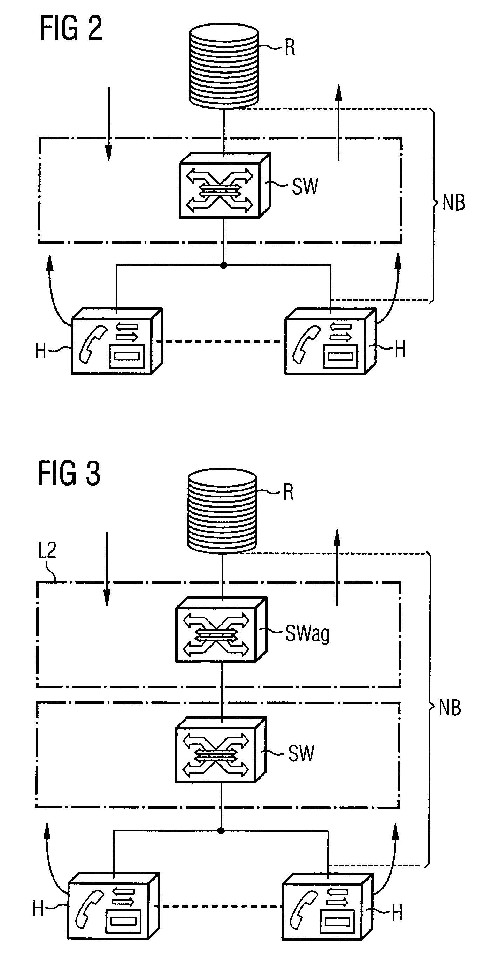

Referring to drawing 2, a network bridge or Ethernet bridge NB is situated between an IGMP multicast router R and an IGMP host H. The network bridge connects multiple network segments (network domains) along the data link layer of the OSI Model. It can take the form of a physical device, such as a network switch, or it may be a virtual device using bridging, as in the case here, where a DSLAM switch SW is connected to the router R and to a plurality of hosts H by means of data links.

The network bridge is configured to dynamically add or remove port assignments from Multicast Groups by an IGMP "snooping" process, a process in which IGMP messages that are exchanged bewteen an end-user host H and a multicast router R are intercepted. Thus, by intercepting, monitoring and filtering IGMP messages between the hosts H and the IGMP Router R, the network bridge determines which Multicast Groups should be supported and on which of its member ports their traffic should be forwarded.

The downward pointing arrows indicate the transmission of membership queries, which can be initiated by a network management system. The lower upward pointing arrows indicate Join / Leave / Membership Report messages from all hosts H.

In particular for the purposes of IPTV, the information related to the viewing habits of the end-user, whose device is attached to a host H, can be retrieved from the DSLAM switch SW near the end-user and correlated with the Multicast Group information to report the end-user viewing habits, for example to a network management system.

Drawing 3 shows one part of a communications network, comprising a network bridge NB, that is particularly suitable for delivering IPTV services in L2/L3 packet-based networks. Although generally the IGMP snooping feature can be utilised in all devices that are contained in the L2 network, for example in the L2 aggregation switch SW_{ag} as shown, in this case, forwarding of Ethernet multicast frames is limited to the UNI border DSLAM device, where subscribers that have subscribed to the television or Video on Demand or another multimedia service are connected via hosts H. This allows an effective way of saving resources in the L2 Ethernet network, since the aggregation switch SW_{ag} need not be occupied with the the same said task of the DSLAM switch SW. Where the snooping feature is however enabled at al1 L2 switches including the shown L2 aggregation switch SW_{ag}, the relevant IGMP information nevertheless only needs to be logged and accessed at the UNI Border device.

As it has been found advantageous to minimise IPTV L2 network occupation, the UNI Border DSLAM switch SW is configured to intercept the IGMP messages that are exchanged between the end-user host, such as a subscriber's STB (Set Top Box) and an IP multicast router in or next to a video head end. According to the "Join" and "Leave" commands carried in the IGMP messages, the DSLAM switch then adds and deletes entries in its forwarding database, in order to add or delete a single subscriber port to obtain Ethernet frames with a certain Ethernet multicast address.

The arrows shown in this drawing have the same meaning as those given with the previous example.

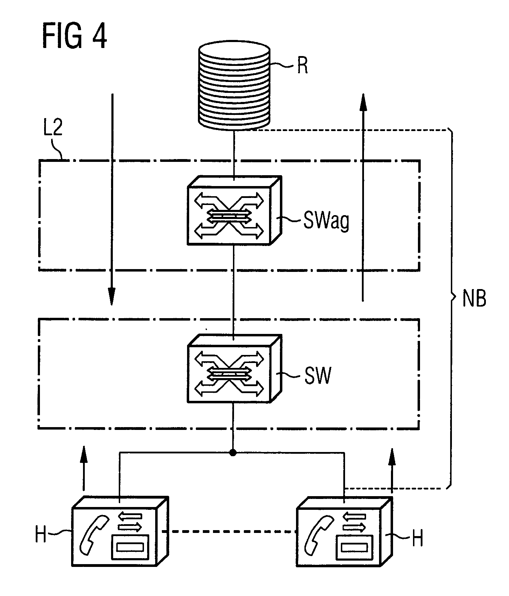

Referring to drawing 4, all multimedia program channels are delivered to each UNI Border DSLAM switch SW, a procedure which will take place by default if IGMP snooping is not used or deactivated in L2 intermediate aggregation switches SW_{ag}, and the UNI Border DSLAM devices perform IGMP snooping to dynamically add and remove subscriber ports to a certain multicast stream. In this case, the delivery of selected multimedia channels to the STB is handled directly by the UNI Border DSLAM device and zapping times are expected to be short.

An alternative lies in manually adding entries to the forwarding database of the intermediate L2 aggregation devices SW_{ag}, in order to determine which Ethernet multicast address should be switched to which ports. In the case of this alternative and in the case of the scenario described with drawing 4, where the IGMP snooping capability is enabled only at the UNI Border DSLAM, the relevant information only needs to be logged and accessed at the UNI Border DSLAM switches SW.

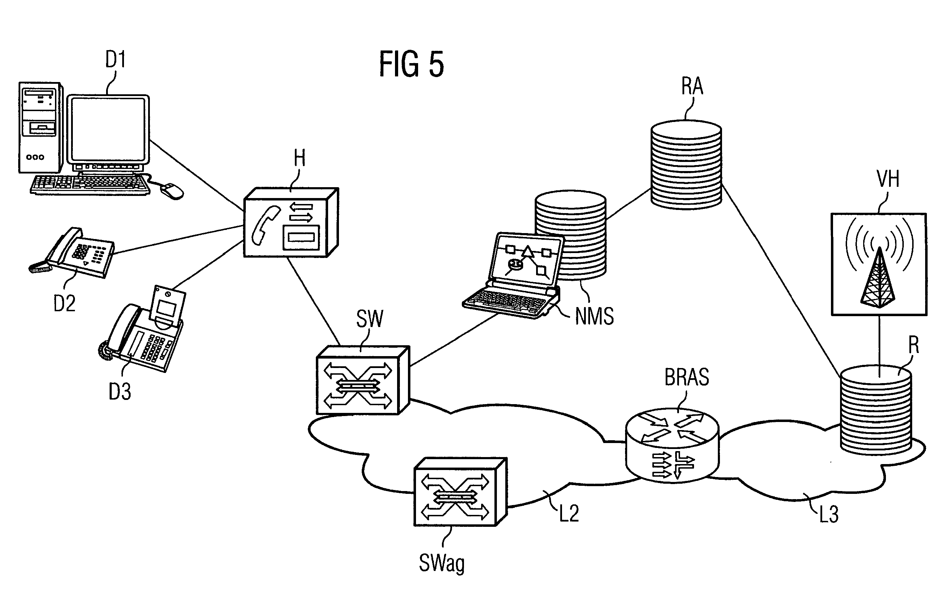

Referring to drawing 5, when an end-user device such as an STB is still not a member of a multicast group and receives a command from a user to change a TV channel, the STB sends a "join/leave group" IGMP command into the network. The DSLAM connected to the STB will snoop this command and for the corresponding interface it will change its membership to the corresponding IP Multicast Group. This information is stored in the DSLAM in Multicast Group Membership logfiles that are retrieved regularly by the network management system. The retrieval process can be executed by using SNMP (Simple Network Management Protocol) or another network element management communication protocol.

A ratings analyser RA, preferrably switched between the network management system NMS and the multicast router R, correlates the user identification available in the NMS with the IGMP Snooping log information and the Multicast group/TV channel information (available at either the multicast router or for example at the video head end VH) to provide the viewing habits information, such as user identification, television channel or the time period spent on each television channel.

Ratings information can be derived by the ratings analyser RA as as follows:
- Rating of Channel X at time Ti = (number of persons or households using subscribed IPTV IP Multicast Group X at time Ti) / (total number of persons or households subscribing IPTV IP Multicast Group X),
- Share of Channel x at time Ti = (number of persons or households using subscribed IPTV Multicast Group X at time Ti) / (total number of persons or households subscribing IPTV IP Multicast Groups).

The "Rating" is considered to be the size of a multimedia viewing or receiving audience relative to the the group of end-users that can possibly access multimedia through the data network.

The "Share" of the second method described above is the percentage of persons or households using subscribed IPTV IP Multicast Group which are tuned to a specific program or station at a specified time.

The following rating related indicators can be extracted from the above indicators over time: Gross Rating Points (GRPs), Target Rating Points (TRPs), Reach (Cume), Frequency and Frequency Distribution.

The user specific information may also be correlated with age, gender and other social statistical data that can be detailed either at the NMS or at an external database of customer information.

Where IGMP Version 1 is used, there is no explicit leave process by means of, for example, an explicit "Leave" message. Thus, the end-user host H does not have to explicitly tell the mulitcast router R of its desire to leave a Multicast Group. Instead, the end-user host H informs the router R of its lack of interest in receiving a multicast stream by not responding to IGMP membership queries from the router R. A similar procedure can take place when IGMP Version 2 is used if the "Leave" command is not used by the end-user host. This can happen for several reasons such as the end-user turning off the television or not using the STB to switch between channels. The DSLAM switch logs the IGMP requests from the host and this data can be retrieved by the NMS and correlated by the rating analyser to extract useful data such as the multimedia viewing habits of the user.

One scenario that may cause ratings measurements to be less precise is if 2 or more PUTs or HUTs (persons using television or households using television) are independently watching the same channel and are served by a common end-user host. In this case the DSLAM switch will record only 1 IGMP "Join" message and the ratings analyzer RA counts only 1 television channel viewer. This can be remedied by configuring the STB to repeatedly send a "Join" command to the DSLAM switch when one or more persons are using the same program passed through it, even if the desired channel is already present at the STB, so that the 2 PUTs would be handled as giving 2 seperate "Join" commands.

### List of Abbreviations

- H: end-user host
- D1 to D3: end-user device
- SW: switch
- SW_{ag}: aggregation switch
- BRAS: BRAS switch
- R: multicast router
- VH: video head end
- NMS: network management system
- RA: ratings analyser
- L2: first network
- L3: second network

## Claims

1. Communications network comprising a plurality of network elements linked to each other, said plurality of network elements comprising at least one end-user host (H) connected to an end-user device (D1, D2, D3) usable by a user, at least one switch (SW, SW_{ag}) and a network management system (NMS), wherein
- the switch comprises means for receiving and storing end-user information from the end-user host,
- the stored end-user information is retrievable from the switch by the network management system.

2. Communications network according to claim 1, wherein the switch (SW) is a UNI-Border switch.

3. Communications network according to one of the claims 1 or 2, wherein the switch (SW) is a DSLAM switch.

4. communications network according to one of the preceding claims, wherein an aggregation switch (SW_{ag}) is connected to the switch (SW) .

5. Communications network according to one of the preceding claims, wherein the means for receiving and storing end-user information comprises a read/writeable memory device.

6. Communications network according to one of the preceding claims, wherein a router (R) is connected to the at least one switch (SW).

7. Communications network according to claim 6, comprising a plurality of Local Area Networks (L2, L3) connected to each other by means of the router (R).

8. Communications network according to claim 7, wherein the router is a BRAS router (BRAS).

9. Communications network according to claims 6 to 8, wherein the router is connected to a network head end (VH).

10. Communications network according to claims 6 to 9, configured to transmitting data according to IGMP.

11. Communications network according to one of the preceding claims, wherein the end-user device (D1, D2, D3) comprises a user-network interface.

12. Communications network according to one of the preceding claims, wherein the user-network interface is adapted to providing multimedia information to an end-user.

13. Communications network according to one of the preceding claims, which is an Ethernet network.

14. Communications network according to one of the preceding claims, in which multicast data is transmittable.

15. Communications network according to claim 14, in which digital television is transmittable.

16. Communications network according to one of the preceding claims, wherein an analyser device (RA) is connected to the network management system (NMS) and is configured to statistically analyse the end-user information.

17. Method for retrieving end-user information in a communications network according to one of the claims 1 to 16, whereby
- end-user information is transmitted from the end-user host (H) to the switch (SW) and is stored there,
- the stored end-user information is transmitted to a network management system (NMS).

18. Method according to claim 17, whereby the end-user information is stored in a log-file,

19. Method according to one of the claims 17 or 18, whereby the stored end-user information is transmitted to the network management system (NMS) upon a query received at the switch (SW) from the network management system.

20. Method according to one of the claims 17 or 18, whereby the stored end-user information is transmitted from the switch (SW) to the network management system (NMS) at an interval.

21. Method according to one of the claims 17 to 20, whereby the end-user information is transmitted to a ratings analyser (RA) for statistical anaylsis.

22. Method according to claim 21, whereby the end-user information is correlated by the ratings analyser (RA) with other information.

23. Method according to one of the claims 17 to 22, whereby the end-user information is sent from the end-user host H via at least one switch (SW, SW_{ag}) to a router (R).

24. Method according to one of the claims 17 to 23, whereby the end-user information is sent from the end-user host H via a least one switch (SW, SW_{ag}) to a network head end (VH).

25. Method according to one of the claims 17 to 24, whereby the transmission of data across the network proceeds according to IGMP.

26. Switch (SW) for use in a communications network, comprising means for storing user-information transmitted from an end-user host (H).

27. Switch according to claim 26, wherein the means comprise a read/writeable memory device.

28. Switch (SW) according to claim 26, that is a UNI-Border switch.

29. Switch (SW) according to claims 26 or 27, that is a DSLAM switch.
